(19) Europäisches Patentamt
European Patent Office
Office européen des brevets

(11) EP 4 722 261 A1

(12) **EUROPEAN PATENT APPLICATION**
published in accordance with Art. 153(4) EPC

(43) Date of publication:
**08.04.2026 Bulletin 2026/15**

(21) Application number: **24815283.7**

(22) Date of filing: **21.05.2024**

(51) International Patent Classification (IPC):
***C08F 212/08*** *(2006.01)* ***C08F 2/44*** *(2006.01)*
***C08F 220/20*** *(2006.01)* ***C08F 220/26*** *(2006.01)*
***G02B 1/04*** *(2006.01)* ***G02C 7/00*** *(2006.01)*

(52) Cooperative Patent Classification (CPC):
**C08F 2/44; C08F 210/08; C08F 212/08; C08F 220/20; C08F 220/26; C08F 290/06; G02B 1/04; G02C 7/00**

(86) International application number:
**PCT/JP2024/018595**

(87) International publication number:
**WO 2024/247799 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087425**
**29.05.2023 JP 2023087426**

(71) Applicant: **TOKUYAMA CORPORATION**
**Yamaguchi 745-8648 (JP)**

(72) Inventors:
- **NOGUCHI, Takao**
  **Shunan-shi, Yamaguchi 745-8648 (JP)**
- **SHIMIZU, Yasutomo**
  **Shunan-shi, Yamaguchi 745-8648 (JP)**

(74) Representative: **Kraus & Lederer PartGmbB**
**Thomas-Wimmer-Ring 15**
**80539 München (DE)**

(54) **CURABLE COMPOSITION, CURED BODY, OPTICAL ARTICLE, LENS, AND EYEGLASSES**

(57) The purpose of the present invention is to provide: a curable composition that can provide a cured body that exhibits high adhesiveness with laminates; a cured body from the curable composition; and an optical article, lens, and eyeglasses that contain the cured body. An embodiment of the present invention provides a curable composition. The curable composition comprises: at least one styrene compound selected from the group consisting of styrene and styrene derivatives; a fluorene group-containing compound represented by formula (I); and a hydroxyl group-containing (meth)acrylate. In formula (I), $R^{33}$ and $R^{34}$ are each independently a hydrogen atom or a methyl group.

FIG. 1

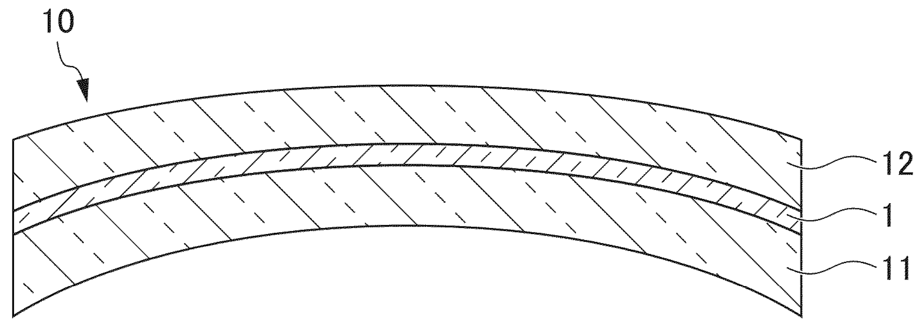




Processed by Luminess, 75001 PARIS (FR)

## Description

TECHNICAL FIELD

The present invention relates to a curable composition, a cured product, an optical article, a lens, and eyeglasses.

BACKGROUND ART

Eyeglass lenses include glass lenses and plastic lenses. Since the specific gravity of the plastic lens is lighter than that of the glass lens, the plastic lens is lighter. On the other hand, the refractive index of the plastic lens tends to be lower than that of the glass lens. In order to further reduce the thickness of the lens, a plastic lens having a high refractive index is required.

The plastic lens is produced, for example, by polymerizing a curable composition containing a fluorene compound, styrene or a styrene derivative, and a radical polymerization initiator.

Citation List

Patent Document

Patent Document 1: Japanese Unexamined Patent Application, Publication No. 2004-269814
Patent Document 2: Japanese Unexamined Patent Application, Publication No. 2008-001777
Patent Document 3: Japanese Unexamined Patent Application, Publication No. 2012-246382
Patent Document 4: Japanese Unexamined Patent Application, Publication No. 2012-251032
Patent Document 5: Japanese Unexamined Patent Application, Publication No. H4-325508

DISCLOSURE OF THE INVENTION

Problems to be Solved by the Invention

An object of the present invention is to provide a curable composition capable of producing a cured product having high adhesion to a laminate, this cured product, and an optical article, a lens, and eyeglasses including the cured product.

Means for Solving the Problems

According to the present disclosure, a curable composition is provided. The curable composition includes at least one styrene compound selected from the group consisting of styrene and styrene derivatives, a fluorene group-containing compound represented by the following formula (I), and a hydroxy group-containing (meth)acrylate:

[Chem. 1].

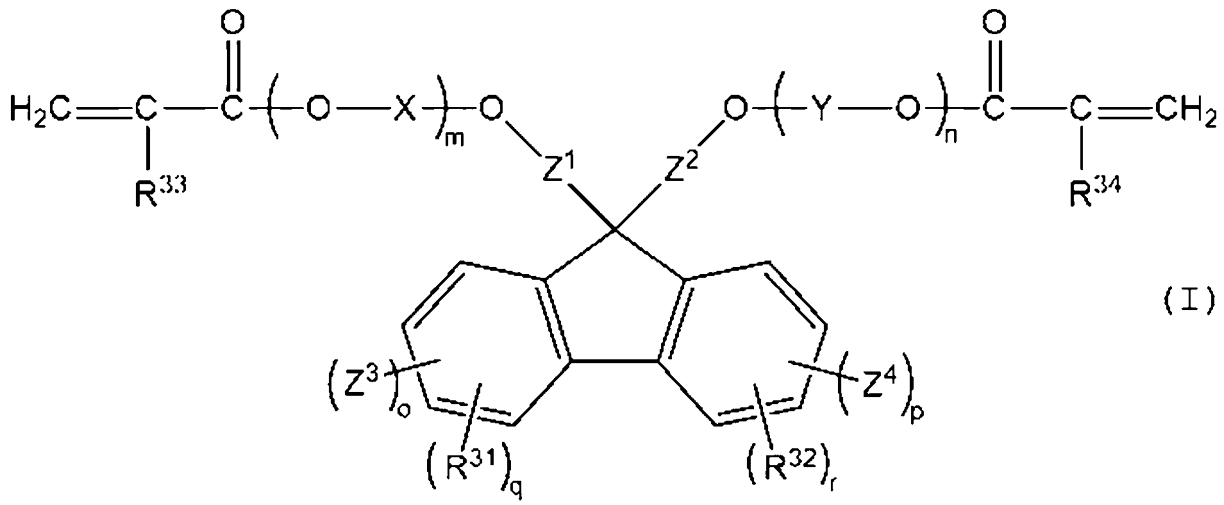

(I)

In the formula (I), $R^{31}$ and $R^{32}$ each independently represent an alkyl group having 1 to 4 carbon atoms. $R^{33}$ and $R^{34}$ each independently represent a hydrogen atom or a methyl group. X and Y each independently represent a linear or branched alkylene group having 1 to 4 carbon atoms. $Z^1$ and $Z^2$ each independently represent an aromatic carbocyclic ring having 5 to 10 carbon atoms or an alkylene group having 1 to 4 carbon atoms. $Z^3$ and $Z^4$ each independently represent an aromatic carbocyclic ring or an alkyl group.

m+n is an integer of 0 to 20.
o+q and p+r are each an integer of 0 to 4.

According to the present disclosure, a cured product is provided. The cured product is a cured product of the curable composition according to an embodiment.
According to the present disclosure, an optical article is provided. The optical article includes the cured product according to the embodiment.
According to the present disclosure, a lens is provided. The lens includes an optical article according to the embodiment.
According to the present disclosure, eyeglasses are provided. The eyeglasses include lenses according to another embodiment.

Effects of the Invention

According to the present invention, it is possible to provide a curable composition capable of producing a cured product having high adhesion to a laminate, this cured product, and an optical article, a lens, and eyeglasses including the cured product.

BRIEF DESCRIPTION OF THE DRAWINGS

[FIG. 1] FIG. 1 is a cross-sectional view schematically showing an example of a lens according to an embodiment; and
[FIG. 2] FIG. 2 is a perspective view schematically showing an example of eyeglasses according to an embodiment.

PREFERRED MODE FOR CARRYING OUT THE INVENTION

[Curable Composition]

The curable composition according to the embodiment includes at least one styrene compound selected from the group consisting of styrene and styrene derivatives, a fluorene group-containing compound represented by the formula (I), and a hydroxy group-containing (meth)acrylate.
By using a curable composition containing a styrene compound having a low specific gravity and a fluorene

group-containing compound having a high refractive index, a cured product having a low specific gravity and a high refractive index can be obtained. Here, functional layers such as a hard coat layer, an antireflection layer, a water-repellent coat layer, a protective layer, and a photochromic layer, and an adhesive layer for adhering these functional layers may be provided on the surface of the plastic lens. Cured products of curable compositions containing a styrene compound and a fluorene group-containing compound have low adhesion to these laminates in some cases. The curable composition according to the embodiment can achieve high adhesion to these laminates by further including a hydroxy group-containing (meth)acrylate.

Hereinafter, the curable composition according to the embodiment will be described in detail.

(Fluorene Group-Containing Compound)

The fluorene group-containing compound is represented by the following formula (I):

[Chem. 2].

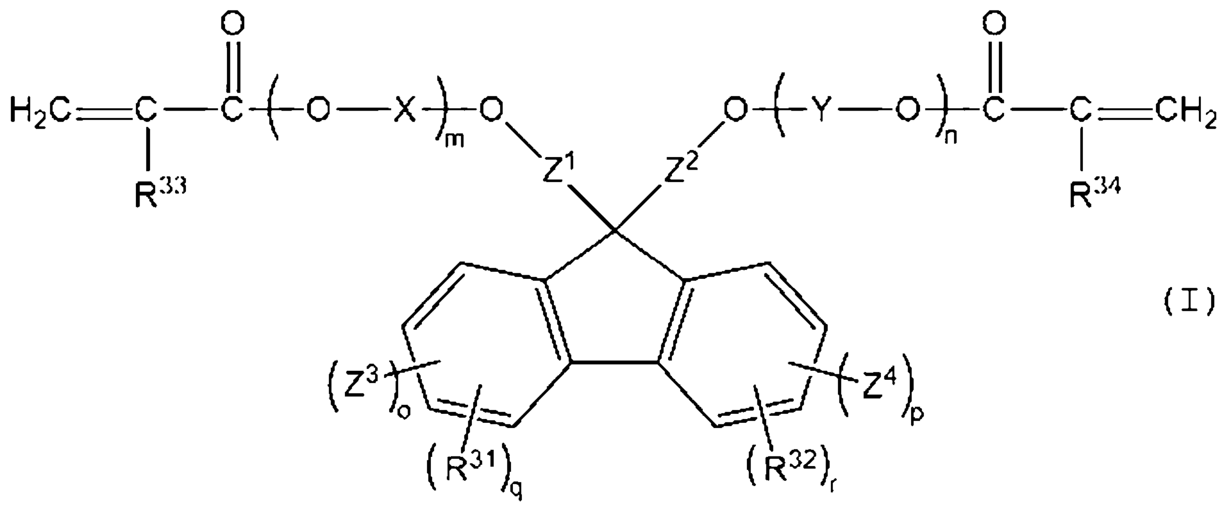

(I)

In the formula (I), $R^{31}$ and $R^{32}$ each independently represent an alkyl group having 1 to 4 carbon atoms. $R^{33}$ and $R^{34}$ each independently represent a hydrogen atom or a methyl group. From the viewpoint of compatibility of the curable composition, $R^{33}$ and $R^{34}$ are preferably hydrogen atoms. That is, the fluorene group-containing compound may be diacrylate or dimethacrylate, and is preferably diacrylate. From the viewpoint of increasing softening point of the cured product, $R^{33}$ and $R^{34}$ are preferably methyl groups. X and Y each independently represent a linear or branched alkylene group having 1 to 4 carbon atoms. $Z^1$ and $Z^2$ each independently represent an aromatic carbocyclic ring having 5 to 10 carbon atoms or an alkylene group having 1 to 4 carbon atoms. $Z^1$ and $Z^2$ are preferably a phenylene group. $Z^3$ and $Z^4$ each independently represent an aromatic carbocyclic ring having 5 to 8 carbon atoms or an alkyl group having 1 to 4 carbon atoms.

m+n is an integer of 0 to 20.

o+q and p+r are each an integer of 0 to 4.

In the curable composition, a proportion of the fluorene group-containing compound is preferably 10% by mass or more, more preferably 14% by mass or more, and still more preferably 19% by mass or more, from the viewpoint of increasing the refractive index of the cured product. From the viewpoint of reducing the specific gravity of the cured product, the proportion of the fluorene group-containing compound is preferably 50% by mass or less, more preferably 40% by mass or less, and still more preferably 30% by mass or less. The proportion may be 45% by mass or less.

The proportion of the fluorene group-containing compound in the curable composition can be calculated by, for example, isolating the fluorene group-containing compound from the curable composition by silica gel chromatography or the like, and measuring weight of the obtained fluorene group-containing compound.

As the fluorene group-containing compound represented by the formula (I), a commercially available compound may be used, or a compound synthesized by a known method may be used.

(Styrene Compounds)

The styrene compound includes at least one selected from the group consisting of styrene and styrene derivatives.

The styrene derivative is a compound having a styrene skeleton represented by the following formula (IIA):

[Chem. 3].

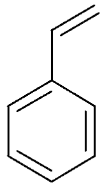

(IIA)

Examples of styrene derivatives include 2-methylstyrene, 3-methylstyrene, 4-methylstyrene, α-methylstyrene, α-methylstyrene dimer, 2,4,6-trimethylstyrene, 4-tert-butylstyrene, vinylphenol, vinylthiophenol, 2-chlorostyrene, 3-chlorostyrene, 4-chlorostyrene, 3-chloromethylstyrene, 4-chloromethylstyrene, 2-bromostyrene, 3-bromostyrene, 4-bromostyrene, 3-bromomethylstyrene, 4-bromomethylstyrene, 4-aminostyrene, 3-cyanomethylstyrene, 4-cyanomethylstyrene, divinylbenzene, trivinylbenzene, 4-vinylbiphenyl, 2,2'-divinylbiphenyl, 4,4'-divinylbiphenyl, 2,2-bis(4-vinylphenyl)propane, bis(4-vinylphenyl)ether, vinylnaphthalene, and divinylnaphthalene.

The styrene derivative preferably includes at least one selected from the group consisting of divinylbenzene, α-methylstyrene, and α-methylstyrene dimer.

α-methylstyrene and α-methylstyrene dimers may function as a chain transfer agent. When divinylbenzene is contained, the cured product tends to have a higher softening point.

The styrene compound preferably includes styrene, and more preferably includes both styrene and a styrene derivative. More preferably, the styrene compound includes styrene, α-methylstyrene, and α-methylstyrene dimer.

In the curable composition, a ratio M1/M2 of a mass M1 of the fluorene group-containing compound to a mass M2 of the styrene compound is preferably 0.10 or more, more preferably 0.25 or more, and still more preferably 0.50 or more, from the viewpoint of increasing the refractive index of the cured product. From the viewpoint of reducing the specific gravity of the cured product, the ratio M1/M2 is preferably 1.0 or less, more preferably 0.90 or less, and still more preferably 0.80 or less. The ratio M1/M2 may be 1.1 or less.

In the curable composition, a ratio M1/M3 of the mass M1 of the fluorene group compound to a mass M3 of styrene is preferably 0.20 or more, more preferably 0.50 or more, and still more preferably 0.80 or more, from the viewpoint of increasing the refractive index of the cured product. The ratio M1/M3 is preferably 1.50 or less, and more preferably 1.20 or less, from the viewpoint of reducing the specific gravity of the cured product. The ratio M1/M3 may be 1.40 or less.

In the curable composition, a proportion of the styrene compound is preferably 10% by mass or more, more preferably 20% by mass or more, and still more preferably 30% by mass or more from the viewpoint of reducing the specific gravity of the cured product. From the viewpoint of increasing the refractive index of the cured product, the proportion of the styrene compound is preferably 70% by mass or less, more preferably 60% by mass or less, and still more preferably 50% by mass or less. This proportion may be 80% by mass or less, and may be 55% by mass or less.

The proportion of styrene in the curable composition is preferably 20% by mass or more and 80% by mass or less, and more preferably 30% by mass or more and 60% by mass or less. The proportion of styrene may be 35% by mass or more and 50% by mass or less.

The proportion of the styrene derivative in the curable composition is preferably 1% by mass or more and 20% by mass or less, and more preferably 5% by mass or more and 15% by mass or less.

In the curable composition, a proportion of α-methylstyrene dimer is preferably 0.1% by mass or more and 10% by mass or less, and more preferably 1% by mass or more and 5% by mass or less.

The proportion of α-methylstyrene in the curable composition is preferably 1% by mass or more and 20% by mass or less, and more preferably 5% by mass or more and 15% by mass or less.

The curable composition may contain divinylbenzene from the viewpoint of increasing the softening point. In this case, the proportion of divinylbenzene is preferably 1% by mass or more and 20% by mass or less, and more preferably 3% by mass or more and 10% by mass or less. This proportion may be 1% by mass or more and 5% by mass or less.

When the styrene compound includes a mixture of styrene and a derivative thereof, a proportion of styrene in the mixture is preferably 50% by mass or more and 95% by mass or less, and more preferably 80% by mass or more and 90% by mass or less. The proportion may be 65% by mass or more.

The proportions of the styrene compound, styrene, styrene derivative, or the like in the curable composition can be calculated, for example, by silica gel chromatography or the like of the curable composition in the same manner as the

sulfur-containing compound.

(Hydroxy Group-Containing (Meth)acrylate)

Hydroxy group-containing (meth)acrylate is a compound having each of one or more hydroxy groups and one or more (meth)acryloyl groups. The hydroxy group-containing (meth)acrylate preferably has 1 or more and 6 or less hydroxy groups, more preferably 1 or more and 4 or less hydroxy groups, and still more preferably two hydroxy groups. The hydroxy group-containing (meth)acrylate preferably has 1 or more and 6 or less, more preferably 1 or more and 4 or less, and still more preferably two (meth)acryloyl groups.

Examples of compounds containing both one hydroxy group and one (meth)acryloyl group include compounds represented by the following formula (2):

[Chem. 4]

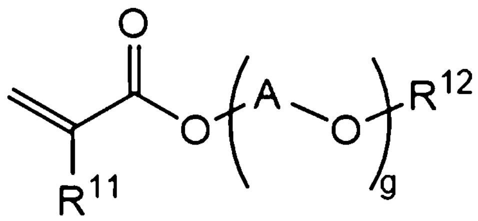

(2)

in which g is a number from 1 to 20 on average.
g is preferably 1.

A represents a linear or branched alkylene group having 2 to 5 carbon atoms. A is preferably an ethylene group.

$R^{11}$ is a hydrogen atom or a methyl group. $R^{11}$ is preferably a methyl group. $R^{12}$ is a hydrogen atom.

Examples of the compound represented by formula (2) include 2-(hydroxyethyl) (meth)acrylate, hydroxypropyl(meth)acrylate, 4-(hydroxybutyl) (meth)acrylate, and the like.

The hydroxy group-containing (meth)acrylate preferably contains an epoxy di(meth)acrylate represented by the following formula (II):

[Chem. 5]

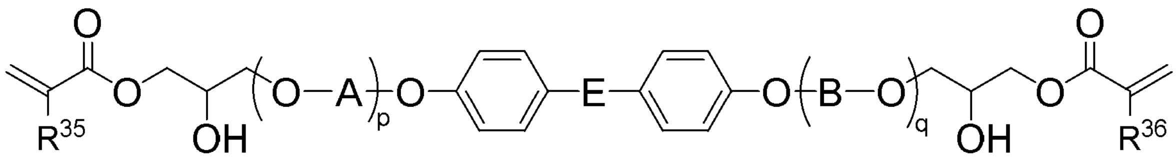

(II)

in which in the formula (II), $R^{35}$ and $R^{36}$ each independently represent a hydrogen atom or a methyl group. From the viewpoint of reducing the specific gravity of the cured product, $R^{35}$ and $R^{36}$ are preferably hydrogen atoms. From the viewpoint of increasing the softening point of the cured product, $R^{35}$ and $R^{36}$ are preferably a methyl group.

A and B each independently represent a linear or branched alkylene group having 1 to 4 carbon atoms which may be substituted with a hydroxy group.

E is one of the groups represented by the following formulas:

[Chem. 6].

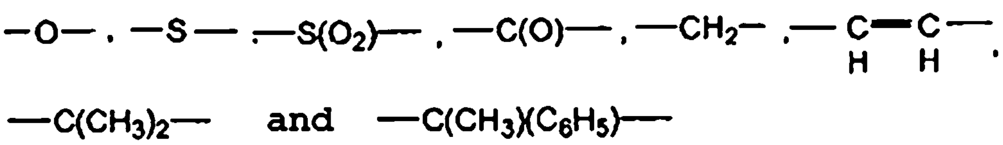

E is preferably $-C(CH_3)_2-$.

p+q is 0 or 1 to 20.
p+q is preferably 0.

Specifically, the structure represented by the formula (II) is preferably a structure represented by the following formula:

[Chem. 7].

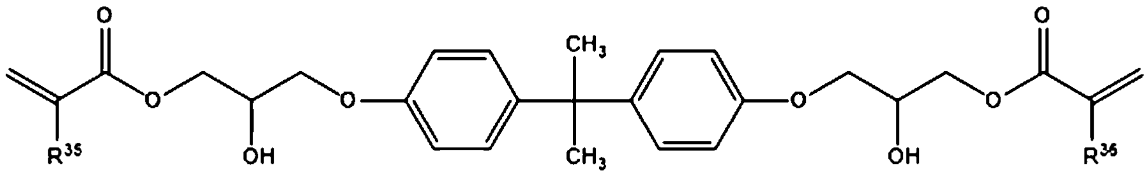

Examples of the hydroxy group-containing (meth)acrylate other than those described above include glycerin di(meth)acrylate and 2-hydroxy-3-acryloyloxypropyl methacrylate.

A proportion of the hydroxy group-containing (meth)acrylate in the curable composition is preferably 1% by mass or more, more preferably 4% by mass or more, and still more preferably 10% by mass or more, from the viewpoint of enhancing the adhesion of the cured product. From the viewpoint of increasing the refractive index of the cured product, the proportion is preferably 50% by mass or less, more preferably 30% by mass or less, and still more preferably 25% by mass or less. The proportion may be 8% by mass or more.

A ratio M7/M1 of a mass M7 of the hydroxy group-containing (meth)acrylate and the mass M1 of the fluorene group-containing compound is, for example, 0.1 or more and 3 or less, and preferably 0.2 or more and 1 or less.

A ratio M7/M2 of the mass M7 of the hydroxy group-containing (meth)acrylate and the mass M2 of the styrene compound is, for example, 0.010 or more and 3.0 or less, preferably 0.10 or more and 1.0 or less, and more preferably 0.2 or more and 0.7 or less. This ratio M7/M2 may be 0.15 or more and 0.70 or less.

In the total amount of the styrene compound, the fluorene group-containing compound, and the hydroxy group-containing (meth)acrylate, a proportion of the styrene compound is preferably 30% by mass or more and 60% by mass or less, a proportion of the fluorene group-containing compound is preferably 10% by mass or more and 50% by mass or less, and a proportion of the hydroxy group-containing (meth)acrylate is preferably 1% by mass or more and 30% by mass or less.

(Other (Meth)acrylates)

The curable composition according to the embodiment may contain a (meth)acrylate in addition to the above-described components. The (meth)acrylate is a monomer having at least one of an acryloyl group or a methacryloyl group. The (meth)acrylate includes monofunctional (meth)acrylate having one (meth)acryloyl group, di(meth)acrylate having two (meth)acryloyl groups, and polyfunctional (meth)acrylate having three or more (meth)acryloyl groups. The (meth)acrylate preferably includes di(meth)acrylate from the viewpoint of enhancing static pressure resistance and improving flexibility of the cured product.

Examples of (meth)acrylates include ethylene glycol di(meth)acrylate, diethylene glycol di(meth)acrylate, triethylene glycol di(meth)acrylate, tetraethylene glycol di(meth)acrylate, ethylene glycol bisglycidyl(meth)acrylate, bisphenol A di(meth)acrylate, hydroxyethyl methacrylate, 2,2-bis(4-(meth)acryloyloxyethoxyphenyl)propane, and 2,2-bis(3,5-dibromo-4-(meth)acryloyl oxyethoxyphenyl)propane.

In the curable composition, a ratio M1/M4 of the mass M1 of the fluorene group-containing compound and a mass M4 of the other (meth)acrylate is preferably 0.1 or more and 4 or less, more preferably 0.5 or more and 3 or less, and still more preferably 0.5 or more and 2 or less. This ratio M1/M4 may be 1.0 or more and 10 or less, and may be 20.0 or more and 9.0 or less.

In the curable composition, a ratio M3/M4 of the mass M3 of styrene and the mass M4 of other (meth)acrylate is preferably 1.0 or more and 20 or less, and more preferably 2 or more and 10 or less. This ratio M3/M4 may be 1.6 or more.

In the curable composition, a proportion of the other (meth)acrylate is preferably 5% by mass or more, more preferably 9% by mass or more, and still more preferably 14% by mass or more, from the viewpoint of enhancing the static pressure resistance of the cured product. The proportion of the other (meth)acrylate is preferably 30% by mass or less, and more preferably 20% by mass or less, from the viewpoint of reducing the specific gravity of the cured product.

The (meth)acrylate preferably includes bisphenol A di(meth)acrylate. When the curable composition contains bisphenol A di(meth)acrylate, a tough cured product excellent in static pressure resistance can be obtained.

The bisphenol A di(meth)acrylate includes at least one compound selected from the group consisting of alkoxylated bisphenol A acrylate and alkoxylated bisphenol A methacrylate. The alkoxylated bisphenol A acrylate

includes at least one compound selected from the group consisting of ethoxylated bisphenol A acrylate and propoxylated bisphenol A acrylate. The alkoxylated bisphenol A methacrylate includes at least one compound selected from the group consisting of ethoxylated bisphenol A methacrylate and propoxylated bisphenol A methacrylate.

The bisphenol A di(meth)acrylate preferably includes a compound represented by the following formula (1):

[Chem. 8]

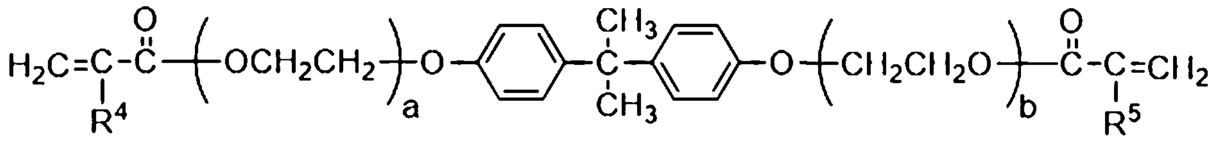

(1)

in which in the formula (1), $R^4$ and $R^5$ each represent a hydrogen atom or a methyl group.

a is an integer of 1 or more and 10 or less.
b is an integer of 1 or more and 10 or less.
a+b is preferably an integer of 2 or more and 20 or less, and a+b is preferably an integer of 2 or more and 5 or less.
a+b may be 10 or less.

In the curable composition, a ratio M1/M6 of the mass M1 of the fluorene group-containing compound and a mass M6 of the bisphenol A di(meth)acrylate is preferably 0.1 or more and 4 or less, more preferably 0.5 or more and 3 or less, and still more preferably 0.5 or more and 2 or less. This ratio M1/M6 may be 1.0 or more and 10 or less, and may be 2.0 or more and 9.0 or less.

In the curable composition, a ratio M3/M6 of the mass M3 of styrene and the mass M6 of bisphenol A di(meth)acrylate is preferably 1.0 or more and 20 or less, and more preferably 2 or more and 10 or less. This ratio M3/M6 may be 1.6 or more.

In the curable composition, the proportion of bisphenol A di(meth)acrylate is preferably 5% by mass or more, more preferably 9% by mass or more, and still more preferably 14% by mass or more, from the viewpoint of enhancing the static pressure resistance of the cured product. The proportion of the bisphenol A di(meth)acrylate is preferably 30% by mass or less, and more preferably 20% by mass or less, from the viewpoint of reducing the specific gravity of the cured product.

In the total amount of the styrene compound, the fluorene group-containing compound, the hydroxy group-containing (meth)acrylate, and the bisphenol A di(meth)acrylate, the proportions of the styrene compound, the fluorene group-containing compound, the hydroxy group-containing (meth)acrylate, and the bisphenol A di(meth)acrylate are preferably 30% by mass or more and 45% by mass or less, 10% by mass or more and 45% by mass or less, 1% by mass or more and 15% by mass or less, and 1% by mass or more and 20% by mass or less, respectively.

A proportion of the other (meth)acrylate in the curable composition can be calculated, for example, by silica gel chromatography of the curable composition in the same manner as the sulfur-containing compound. A total number of polymerizable functional groups FN of the curable composition is preferably 4.0 mmol/g or more and 10.0 mmol/g or less. When the total number of polymerizable functional groups FN is within this range, a cured product having sufficient hardness can be obtained. The total number of polymerizable functional groups FN is more preferably 5.0 mmol/g or more and 9.0 mmol/g or less, and still more preferably 5.5 mmol/g or more and 7.0 mmol/g or less. The number of (meth)acryloyl groups, MN, in the curable composition is preferably 5.0 mmol/g or less, more preferably 2.0 mmol/g or less, and still more preferably 1.5 mmol/g or less from the viewpoint of compatibility of the curable composition. The number of (meth)acryloyl groups MN in the curable composition is preferably 0.1 mmol/g or more, more preferably 0.5 mmol/g or more, and still more preferably 1.0 mmol/g or more, from the viewpoint of increasing the softening point of the cured product. In the curable composition, a proportion of the number of (meth)acryloyl groups MN to the total number of polymerizable functional groups FN, that is, a ratio of (meth)acryloyl (MN/FN) is preferably 30% or less, more preferably 25% or less, and still more preferably 20% or less from the viewpoint of compatibility of the curable composition. In the curable composition, the (meth)acryloyl ratio (MN/FN) is preferably 2% or more, more preferably 10% or more, and still more preferably 15% or more from the viewpoint of increasing the softening point of the curable composition. The total number of polymerizable functional groups FN and the number of (meth)acryloyl groups MN of the curable composition can be calculated from the molar amount of each functional group of each polymerizable compound.

(Polymerization Initiators)

The polymerization initiator is mainly used for curing a curable composition containing at least one of cationic polymerizable monomers or radical polymerizable monomers. As the polymerization initiator, a thermal polymerization initiator or a photopolymerization initiator may be used.

As the radical thermal polymerization initiator, at least one selected from the group consisting of dialkyl peroxides, peroxyesters, percarbonates, and azo compounds may be used.

As the radical photopolymerization initiator, at least one selected from the group consisting of benzophenone, acetophenone-based compounds, α-dicarbonyl-based compounds, and acylphosphine oxide-based compounds may be used. The acylphosphine oxide-based compounds include 2,6-dimethylbenzoyldiphenylphosphine oxide, bis(2,4,6-trimethylbenzoyl)-phenylphosphine oxide, bis(2,6-dimethoxybenzoyl)-2,4,4-trimethyl-pentylphosphine oxide, 2,4,6-trimethylbenzoyldiphenylphosphine oxide, methyl 2,4,6-trimethylbenzoyldiphenylphosphinate, 2,6-dichlorobenzoyldiphenylphosphine oxide, and 2,6-dimethoxybenzoyldiphenylphosphine oxide.

An amount of the polymerization initiator in the curable composition is, for example, 0.01% by mass or more and 5% by mass or less, and preferably 0.1% by mass or more and 3% by mass or less.

The polymerizable composition preferably contains a low-temperature polymerization initiator having a one-minute half-life temperature lower than 100°C. By using the low-temperature polymerization initiator, occurrence of haze in the cured product can be suppressed. That is, the cured product is prepared by, for example, injecting a curable composition into a mold composed of two glass plates and polymerizing the curable composition. At this time, the mold may be formed by bonding two glass plates to each other with an adhesive tape or the like. The liquid styrene compound contained in the curable composition tends to have high compatibility with various organic compounds. When the adhesive tape and the curable composition come into contact with each other, the liquid styrene compound dissolves organic compounds contained in the adhesive tape or the like, and impurities may be mixed into the curable composition. These impurities may cause the cured product to be hazy. When a polymerization initiator having a one-minute half-life temperature lower than 100°C is used, polymerization of the curable composition can be started early at a relatively low temperature. As a result, the liquid styrene compound is cured early, so that the incorporation of impurities into the curable composition can be suppressed.

The one-minute half-life temperature of the low-temperature polymerization initiator is preferably 80°C or higher and lower than 100°C, and more preferably 90°C or higher and 95°C or lower.

As the low-temperature polymerization initiators, the following can be used: 1,1,3,3-tetramethylbutyl peroxyneodecanoate (Perocta® ND), cumyl peroxyneodecanoate (Percumyl® ND), diisopropyl peroxydicarbonate (Peroyl® IPP), di(2-ethylhexyl)peroxydicarbonate (Peroyl® OPP), diisobutyryl peroxide (Peroyl® IB), di-n-propyl peroxydicarbonate (Peroyl® NPP), di-sec-butyl peroxydicarbonate (Peroyl® SBP), di(4-t-butylcyclohexyl)peroxydicarbonate (Peroyl® TCP), etc.

A proportion of the low-temperature polymerization initiator in the curable composition is, for example, 0.01% by mass or more and 5% by mass or less, and preferably 1.0% by mass or more and 3.0% by mass or less. This proportion may be 0.1% by mass or more.

A ratio M10/M2 of a mass M10 of the low-temperature polymerization initiator and the mass M2 of the styrene compound is preferably 0.001 or more and 0.1 or less, more preferably 0.010 or more and 0.050 or less, and still more preferably 0.020 or more and 0.040 or less. This ratio M10/M2 may be 0.005 or more.

The polymerizable composition preferably contains a high-temperature polymerization initiator having a one-minute half-life temperature of 100°C or higher. By including a high-temperature polymerization initiator, the polymerization is enhanced and an amount of residual monomer can be reduced. For the polymerizable composition, the high-temperature polymerization initiator and the low-temperature polymerization initiator are more preferably used in combination.

The one-minute half-life temperature of the high-temperature polymerization initiator is preferably 100°C or higher and 140°C or lower, and more preferably 101°C or higher and 130°C or lower.

As the high-temperature polymerization initiator, the following can be used: 1,1,3,3-tetramethylbutyl peroxy-2-ethylhexanoate (Perocta® O), t-butyl peroxyneodecanoate (Perbutyl® ND), t-butyl peroxypivalate (Perbutyl® PV), t-butyl peroxy-2-ethylhexanoate (Perbutyl® O), t-hexyl peroxyneodecanoate (Perhexyl® ND), t-hexyl peroxypivalate (Perhexyl® PV), di(3,5,5-trimethylhexanoyl) peroxide (Peroyl® 355), dilauroyl peroxide (Peroyl® L), disuccinic acid peroxide (Peroyl® SA), 2,5-dimethyl-2,5-di(2-ethylhexanoylperoxy)hexane (Perhexa® 25O), t-hexyl peroxy-2-ethylhexanoate (Perhexyl® O), dibenzoyl peroxide (Nyper® BW), and the like.

A proportion of the high-temperature polymerization initiator in the curable composition is, for example, 0.01% by mass or more and 5% by mass or less, preferably 0.1% by mass or more and 2% by mass or less, and more preferably 0.2% by mass or more and 1% by mass or less. The proportion may be 3% by mass or less.

A ratio M10/M11 of the mass M10 of the low-temperature polymerization initiator and a mass M11 of the high-temperature polymerization initiator is preferably 0.1 or more and 10 or less, more preferably 1 or more and 8 or less, and

still more preferably 1.5 or more and 5 or less. This ratio M10/M11 may be 0.2 or more and may be 0.4 or more.

(Ultraviolet Absorbers)

The curable composition preferably contains an ultraviolet absorber. The ultraviolet absorber has a peak in a wavelength region of 400 nm or less in its absorption spectrum. By including the ultraviolet absorber, discoloration of the cured product can be suppressed. That is, the sulfur-containing compound and the styrene compound may be decomposed by ultraviolet rays. When these compounds are decomposed, radicals may be generated. The radicals may accelerate oxidative degradation of the cured product, for example, causing a colorless transparent cured product to change its color into yellow.

The ultraviolet absorber preferably has a peak in at least one of a wavelength region of 280 nm or more and less than 320 nm or a wavelength region of 320 nm or more and 360 nm or less in the absorption spectrum of the ultraviolet absorber. The ultraviolet absorber more preferably has a peak in both the wavelength region of 280 nm or more and less than 320 nm and the wavelength region of 320 nm or more and 360 nm or less. The ultraviolet absorber preferably has a peak in at least one of a wavelength region of 290 nm or more and less than 310 nm or a wavelength region of 330 nm or more and 350 nm or less, and more preferably has peaks in both of them.

In the absorption spectrum of the ultraviolet absorber, the horizontal axis represents wavelength and the vertical axis represents absorbance. The absorption spectrum can be measured by a spectrophotometer. As a measurement sample, for example, a chloroform solution in which an ultraviolet absorber having a concentration of 10 μM is dissolved and which is adjusted to a temperature of 23°C is used.

As the ultraviolet absorber, an organic compound may be used. As the ultraviolet absorber, for example, at least one selected from the group consisting of benzotriazole derivatives, benzophenone derivatives, ethylhexyl methoxycinnamate, and triazine derivatives is used. The ultraviolet absorber preferably includes at least one selected from the group consisting of benzotriazole derivatives, benzophenone derivatives, cyanoacrylate derivatives, and ethylhexyl methoxycinnamate, more preferably includes at least one selected from the group consisting of benzotriazole derivatives and ethylhexyl methoxycinnamate, and still more preferably includes a benzotriazole derivative.

The benzotriazole derivative preferably includes a compound represented by the following formula (3):

[Chem. 9]

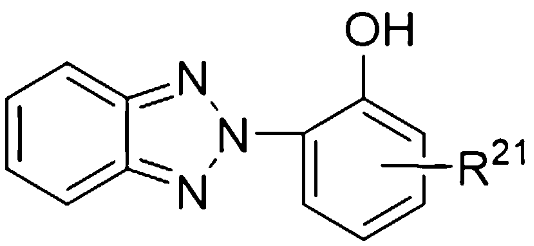

(3)

in which in formula (3), $R^{21}$ represents an alkyl group having 1 or more and 10 or less carbon atoms or an oxyalkyl group having 1 or more and 10 or less carbon atoms. $R^{21}$ is preferably a methyl group or an oxyoctyl group.

As the benzophenone derivative, Adeka Stab 1413 of Adeka Corporation, which is octabenzone, SEESORB 107 or SEESORB L58 of Shipro Chemical Industry Co., Ltd., or the like can be used. As the cyanoacrylate derivative, Uvinul® 3039, etc., of BASF can be used. As ethylhexyl methoxycinnamate, Uvinul® MC-80 or the like of BASF can be used. As the benzotriazole derivative, Adeka Stab LA-32 and LA-36 of Adeka Corporation, SEESORB 707 of Shipro Chemical Industry Co., Ltd., and the like can be used. As the triazine derivative, Adeka Stab LA-46 of Adeka Corporation or the like can be used.

The ultraviolet absorbers may be used alone or in combination of two or more thereof. For example, an ultraviolet absorber having a maximum absorption wavelength in a wavelength region of 280 nm or more and less than 320 nm and an ultraviolet absorbent having a maximum absorption wavelength in a wavelength region of 320 nm or more and 360 nm or less may be used in combination. Alternatively, an ultraviolet absorbent having peaks in both the wavelength region of 280 nm or more and less than 320 nm and the wavelength region of 320 nm or more and 360 nm or less may be used in combination with an ultraviolet absorbent having a peak in the wavelength region of 300 nm or more and 320 nm or less.

A proportion of the ultraviolet absorber contained in the curable composition is, for example, 0.1% by mass or more and 10% by mass or less, preferably 0.5% by mass or more and 5% by mass or less, and more preferably 0.8% by mass or more and 30 by mass or less.

(Photochromic Compounds)

The curable composition may include a photochromic compound. The photochromic compound is a compound capable of reversibly generating two or more isomers, each having mutually different light absorption spectra by action of light. The photochromic compound becomes an isomer showing a colorless leuco state, that is, a colorless body, when ultraviolet rays are blocked, and becomes an isomer showing a colored chromogenic state, that is, a colored body, when irradiated with ultraviolet rays. The cured product of the curable composition containing a photochromic compound has a light control function, that is, photochromic properties that the color changes depending on the irradiation dose of ultraviolet rays. Such a cured product is used, for example, in photochromic lenses, accessories, or the like.
As the photochromic compound, for example, at least one selected from the group consisting of chromene compounds, fulgide compounds, and spirooxazine compounds is used. As the photochromic compound, a chromene compound is preferably used. The chromene compound includes a compound having a 1-benzopyran skeleton, a spiropyran compound having a spiropyran skeleton, and a naphthopyran compound having a naphthopyran skeleton. The naphthopyran compound includes an indenonaphthopyran compound having an indenonaphthopyran skeleton. The chromene compound preferably includes an indenonaphthopyran compound having an indeno[2,1-f]naphtho[1,2-b]pyran skeleton. A cured product containing a chromene compound having an indeno[2,1-f]naphtho[1,2-b]pyran skeleton tends to have excellent durability.

(Other Additives)

The curable composition may contain other additives. The additives include, for example, at least one selected from the group consisting of release agents, blue light absorbers, high-energy visible light absorbers, infrared absorbers, antioxidants, anti-coloring agents, antistatic agents, fluorescent dyes, dyes, pigments, fragrances, solvents, leveling agents, and polymerization regulators.
As the blue light absorber, a compound having an absorption peak in a wavelength region of more than 400 nm and 450 nm or less in the absorption spectrum may be used. Such a compound is, for example, at least one selected from the group consisting of perylene-based compounds, porphyrin-based compounds, carotenoid compounds, and cyanine-based compounds. As the blue light absorber, a porphyrin-based compound is preferably used, and a tetraazaporphyrin compound is more preferably used.
The high-energy visible light absorber is a blue light absorber having an absorption peak in the wavelength region of 400 nm or more and 420 nm or less. As the high-energy visible light absorber, the same agent as the blue light absorber may be used.
The dye preferably includes a compound having an absorption peak in a wavelength region of 540 nm or more and 650 nm or less, and more preferably includes a compound having an absorption peak in a wavelength region of 550 nm or more and 600 nm or less in the absorption spectrum. By containing such a compound, antiglare properties of the cured product can be enhanced. Examples of such a compound include nitro-based compounds, azo-based compounds, anthraquinone-based compounds, selenium-based compounds, porphyrin-based compounds, and rare earth metal compounds. As such a compound, at least one selected from the group consisting of tetraazaporphyrin compounds and neodymium compounds is preferably used.

[Cured Products]

The cured product is obtained by curing the curable composition according to the embodiment.
The cured product of the curable composition according to the embodiment can have a high refractive index of 1.55 or more, 1.59 or more, or 1.60 or more. The refractive index of the cured product can be measured using, for example, a commercially available refractometer. Specifically, the refractive index can be measured using an Abbe refractometer NAR-3T manufactured by ATAGO.
The cured product of the curable composition according to the embodiment can have a low specific gravity of 1.20 or less, 1.15 or less, or 1.13 or less. The specific gravity of the cured product can be measured using, for example, a commercially available specific gravimeter. Specifically, it can be measured using an automatic specific gravimeter DSG-1 manufactured by Toyo Seiki Seisaku-sho or the like.
The curable composition according to the embodiment preferably has a softening point of 100°C or higher. When the softening point is high, the cured product is less likely to be deformed. The softening point of the cured product is preferably 105°C or higher, and more preferably 110°C or higher. The upper limit of the softening point of the cured product is not particularly limited, but according to one example, the softening point is 130°C or lower. The softening point of the cured product can be measured by, for example, thermomechanical analysis.
The shape of the cured product is not particularly limited. The cured product may be used as an optical article. Optical articles include, for example, plastic lenses such as semi-finished lenses and finished lenses, windows of

automobiles and buildings, information recording devices, decorative articles, and the like. The cured product according to the embodiment is suitably used as a lens substrate for plastic lenses.

The cured product of the curable composition is obtained by, for example, a cast polymerization method. Specifically, the cured product can be obtained by filling a mold with a curable composition and thermally polymerizing the curable composition. As heating conditions, for example, the temperature is raised from the initial temperature to the curing temperature over a period of 10 hours or more and 60 hours or less. The initial temperature is, for example, equal to or higher than room temperature and equal to or lower than 50°C. The curing temperature is, for example, 80°C or higher and 120°C or lower.

[Lenses]

The lens according to the embodiment includes an optical article including the cured product according to the embodiment. The lens according to the embodiment may be a semi-finished lens or a finished lens.

The lens according to the embodiment may include a lens substrate including the cured product according to the embodiment, and a hard coat layer provided on at least one main surface of the lens substrate. The hard coat layer may be provided on both surfaces of the lens substrate. An antireflection film may be present on the surface of the hard coat layer. At least one of an adhesive layer, a photochromic layer, or a polarizing layer may be present between the lens substrate and the hard coat layer.

The lens according to the embodiment may include, for example, a lens substrate, an adhesive layer provided on the surface of the lens substrate, and a hard coat layer provided on this adhesive layer. The lens according to the embodiment may include, for example, a laminate including a lens substrate, an adhesive layer provided on a surface of the lens substrate, a photochromic layer provided on this adhesive layer, a hard coat layer provided on this photochromic layer, and an antireflection film provided on the hard coat layer.

The lens according to the embodiment may include a lens substrate including a cured product, and a photochromic layer provided on at least one main surface of the lens substrate.

The hard coat layer includes, for example, a silicon-containing compound such as organic silane and inorganic silane, and an inorganic oxide. As the inorganic oxide, a material having a high refractive index such as titanium oxide ($TiO_2$), zirconium oxide ($ZrO_2$), or cerium oxide ($CeO_2$) is used. These inorganic oxides have ultraviolet absorbing ability. Therefore, a lens provided with a hard coat layer containing these inorganic oxides is less likely to cause discoloration. From the viewpoint of high ultraviolet absorbing ability, it is preferable to contain at least one inorganic oxide selected from the group consisting of titanium oxide and cerium oxide.

The antireflection film is a film that prevents light from being reflected by an interference action. The antireflection film has a multilayer structure in which a relatively high refractive index film and a relatively low refractive index film are laminated. The low refractive index film is made of, for example, silicon dioxide ($SiO_2$) having a refractive index of about 1.43 to 1.47. The high refractive index film is made of a material having a refractive index higher than that of the low refractive index layer. As such a material, for example, zirconium oxide ($ZrO_2$), tin oxide ($SnO_2$), niobium oxide ($Nb_2O_5$), tantalum oxide ($Ta_2O_5$), titanium oxide ($TiO_2$), yttrium oxide ($Y_2O_3$), aluminum oxide ($Al_2O_3$), a mixture thereof (for example, indium tin oxide (ITO)), or the like is used.

The photochromic layer includes, for example, the above-described photochromic compound and a resin. The resin may include at least one selected from the group consisting of polyester resins, polyamide resins, allyl resins, acrylic resins, methacrylic resins, polyurethane resins, polyurethane urea resins, polythiourethane resins, polythiourethane urea resins, polythioepoxy resins, and polycarbonate resins.

The adhesive layer may include a resin exemplified for the resins that may be included in the photochromic layer. As the adhesive layer, a urethane resin is preferably used. The adhesive layer containing the urethane resin tends to have high adhesion to the cured product according to the embodiment. By providing the adhesive layer, the impact resistance of the lens tends to be enhanced. The adhesive layer is obtained, for example, by applying a primer composition onto the lens substrate and drying the primer composition. As the primer composition, a dispersion of a moisture-curable urethane resin or a urethane prepolymer thereof is preferably used.

The polarizing layer can be formed, for example, by applying a dichroic dye to a surface of the lens substrate. Alternatively, a polarizing film may be used as the polarizing layer. As the polarizing film, a film obtained by dyeing a stretched or non-stretched polyvinyl alcohol (PVA) film with a dichroic dye may be used.

The lens according to the embodiment may be a laminate of first and second lens substrates including the cured product according to the embodiment and a binder sheet located between the first and second lens substrates. The binder sheet has one main surface covered with the first lens substrate and the other main surface covered with the second lens substrate. Side surfaces of the binder sheet may also be covered with the lens substrate. The binder sheet includes, for example, first and second optical sheets and an adhesive layer located between the first and second optical sheets to adhere them. The first and second optical sheets include at least one selected from the group consisting of polyvinyl alcohol resins, polyethylene terephthalate resins, polycarbonate resins, polyamide resins, polyester resins, cellulose

resins, (meth)acrylic resins, polyurethane resins, polyurethane urea resins, polyimide resins, epoxy resins, and polyolefin resins. When the polyvinyl alcohol resin film is used as the optical sheet, the film may have a polarizing function. The adhesive layer may include a functional dye, such as a photochromic compound.

FIG. 1 is a cross-sectional view schematically showing an example of a lens according to the embodiment. A lens 10 shown in FIG. 1 includes a lens substrate 11, a hard coat layer 12 provided on a convex-surface-side main surface of the lens substrate 1, and an adhesive layer 1 located between the lens substrate 11 and the hard coat layer 12.

FIG. 2 is a perspective view schematically showing an example of glasses according to the embodiment. Eyeglasses 100 shown in FIG. 2 includes a lens 101 and a frame 102 that supports the lens 101. The lens 101 includes the optical article according to the embodiment.

## EXAMPLES

The present invention will be described in more detail with reference to the following Examples. These Examples merely describe the present invention, and the concept and scope of the present invention are not limited to those of these Examples.

<Example 1>

(Preparation of Curable Compositions)

A curable composition was prepared by mixing 70 parts by mass of styrene, 20 parts by mass of FA1, 2 parts by mass of α-methylstyrene dimer, 8 parts by mass of α-methylstyrene, 2 parts by mass of UVA1, 2 parts by mass of PI1, and 1 part by mass of PI3.

(Preparation of Cured Products)

First, two glass plates having a gap of 2 mm were fixed to each other with an adhesive tape (Jantape, JT8865C3) to prepare a mold. Next, the curable composition was sufficiently stirred and mixed, degassed under vacuum, poured into the mold, and polymerized by thermal polymerization. Polymerization was carried out for 21 hours while gradually raising the temperature from 35°C to 90°C using an air furnace. After completion of the polymerization, the cured product was removed from the mold. The shape of the cured product was a flat plate having a diameter of 80 mm and a thickness of 2 mm.

(Manufacturing of Laminates)

The surface of the obtained cured product was chemically treated with a 20% by mass sodium hydroxide solution. A urethane resin-based primer (TS-56-PH3 manufactured by Tokuyama) was applied on the main surface of the chemically treated cured product by a dip coating method to form a coating film. The film thickness of the primer layer was 1 μm. After the coating film was sufficiently dried, a thermosetting composition HC1 (TS-56-KAH manufactured by Tokuyama) was applied by the dip coating method to form a coating film. The thermosetting composition HC1 included zirconia, ceria, a silane coupling agent, and an organic solvent. After the coating film was sufficiently dried, the dried coating film was thermally cured. During the thermal curing, the coating film was heated at a temperature of 110°C for 3 hours. Thus, a laminate in which the hard coat layer was laminated on the main surface of the cured product was obtained. The thickness of the hard coat layer was 2 μm.

<Examples 2 to 20 and Examples 23 to 26>

Cured products were obtained in the same manner as in Example 1 except that the formulations of the curable compositions were changed as shown in Table 1 or 2. The details of the abbreviations in Tables 1 and 2 are as follows.

MSD: α-methylstyrene dimer
MS: α-methylstyrene
DVB: divinylbenzene
FA1: ogsol EA-0200 (R=H and m+n=2 in the following formula) (manufactured by Osaka Gas Chemicals)
FA2: KOMERATE D064 (R=H and m+n=6 in the following formula) (manufactured by KPX)
FM1: R=$CH_3$ and m+n=2

[Chem. 10]

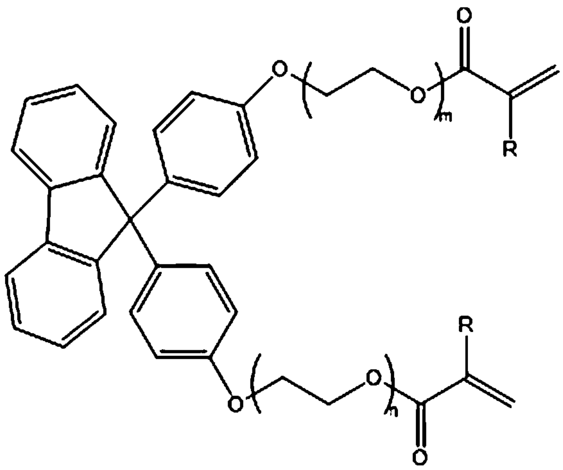

(Synthesis Example of FM1)

To a 100 mL flask, 50 g of bisphenoxyethanolfluorene (BPEF, manufactured by Osaka Gas Chemicals) and 40 mL of dichloromethane were added, and after cooling to 10°C, 26 g (2.2 eq.) of methacrylic acid chloride and 27 g (2.4 eq.) of triethylamine were added dropwise, followed by stirring at room temperature for 5 hours. Thereafter, the reaction solution was washed three times with a 3% hydrochloric acid solution and three times with water, and then washed three times with a 10% aqueous sodium hydroxide solution and three times with water. The organic layer was dried over magnesium sulfate, and the solvent was distilled off under a reduced pressure to obtain FM1 ($R=CH_3$) represented by the above-described formula (yield: 75%).

The obtained compound was dissolved in deuterated chloroform and then measured using a $^1$H-nuclear magnetic resonance spectrometry apparatus (JEOL JNM-ECA400II, 400 MHz, reference material: TMS). When the proton nuclear magnetic resonance spectrum of FM1 was measured, the following peaks were shown.

$\delta$ 1.92 (m, 6H), 4.15 (t, 4H), 4.45 (t, 4H), 5.55 (m, 2H), 6.10 (m, 2H), 6.76 (d, 4H), 7.11 (d, 4H), 7.25 (m, 2H), 7.32-7.37 (m, 4H), 7.75 (m, 2H).

3000A: epoxy ester 3000A (R=H in the following formula) (manufactured by Kyoeisha Chemical).
3000MK: epoxy ester 3000MK (R=Me in the following formula) (manufactured by Kyoeisha Chemical).

[Chem. 11]

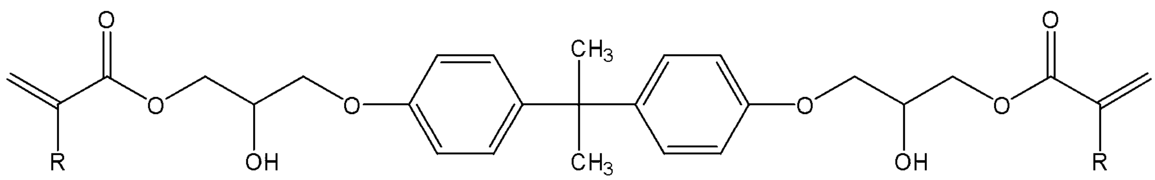

HEMA: hydroxyethyl methacrylate represented by the following formula:

[Chem. 12]

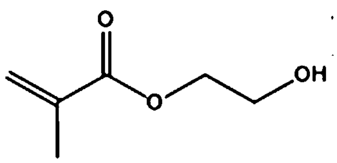

BPE100: bisphenol A dimethacrylate represented by the following formula:
The mean value of m+n is 2.6. BPE200: bisphenol A dimethacrylate represented by the following formula:
The mean value of m+n is 4. BPE500: bisphenol A dimethacrylate represented by the following formula:
The mean value of m+n is 10.

[Chem. 13]

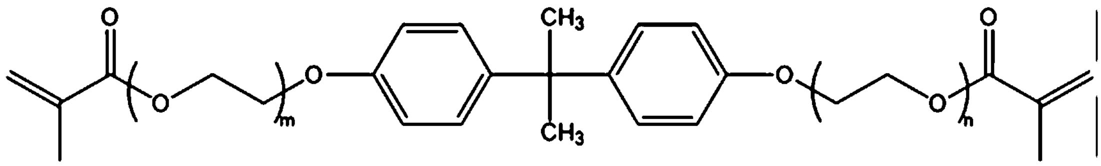

ABE300: bisphenol A diacrylate represented by the following formula:
The mean value of a+b is 3.

[Chem. 14]

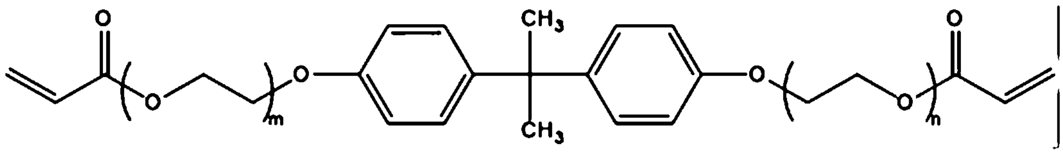

UVA1: ultraviolet absorber represented by the following formula:

[Chem. 15]

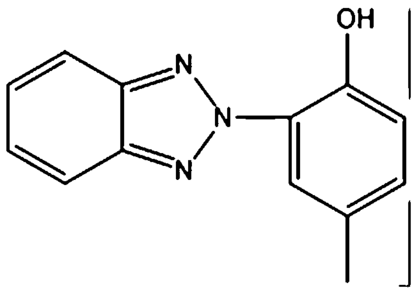

UVA2: ultraviolet absorber represented by the following formula:

[Chem. 16]

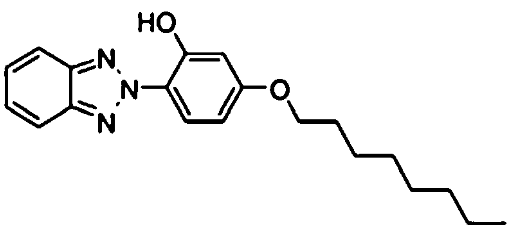

PI1: polymerization initiator Perocta® ND (one-minute half-life temperature: 92.4°C)

PI2: polymerization Initiator Perbutyl® ND (one-minute half-life temperature: 103.5°C)
PI3: polymerization initiator Perocta® O (one-minute half-life temperature: 124.3°C)

(Ratio of (Meth)Acryloyl Group in Each Curable Composition)

The ratios of (meth)acryloyl groups in respective curable compositions were determined by the following formula (a) and are shown in Tables 4 and 5.

(Ratio of (meth)acryloyl groups)=[(number of (meth)acryloyl groups)/(number of total polymerizable functional groups)x100 (a) (a)

<Evaluation Tests>

(Softening Points)

The softening points of the cured products according to Examples 1 to 20 and 23 to 26 were measured using a thermomechanical analyzer TMA8311 manufactured by Rigaku (three-point bending method, temperature rising rate: 10°C/min). The test results are shown in Table 3.

(Refractive Indexes)

Refractive indexes of the cured products according to Examples 1 to 20 and 23 to 26 were measured using an Abbe refractometer NAR-3T manufactured by ATAGO. The test results are shown in Table 3.

(Specific Gravity)

The specific gravities of the cured products according to Examples 1 to 20 and 23 to 26 were measured using an automatic specific gravimeter DSG-1 manufactured by Toyo Seiki Seisaku-sho. The test results are shown in Table 3.

(Haze)

The degrees of haze of the cured products according to Examples 1 to 20 and 23 to 26 were visually evaluated based on the following evaluation criteria. The test results are shown in Table 3.

(Evaluation Criteria)

A: transparency is observed in evaluation under a fluorescent lamp, and haze is not observed in evaluation under a light collector. B: transparency is observed in evaluation under a fluorescent lamp, but haze is observed in evaluation under a light collector.

(Light Resistance Test)

The HC1 laminates according to Examples 1 to 20 and 23 to 26 were subjected to a light resistance test using a xenon weather meter X25 manufactured by Suga Test Instruments.

Specifically, first, a sample was irradiated with ultraviolet rays using a xenon lamp for 144 hours. The test temperature was 50°C and the irradiance was 40 $W/m^2$ (300 nm to 400 nm). Next, the ultraviolet irradiation was stopped, and yellowness index of the sample was measured to obtain the yellowness index YI of the sample after the light resistance test. The yellowness index was measured using a touch panel color computer SM-T manufactured by Suga Test Instruments. The test results are shown in Table 3.

(Adhesion Test)

The HC1 laminates according to Examples 1 to 20 and 23 to 26 were subjected to a cross-cut tape peeling test in accordance with Japanese Industrial Standards JIS D0202:1988. Cellophane tape® manufactured by Nichiban was used as the cellophane adhesive tape. The adhesion was evaluated based on the following evaluation criteria by the number of unpeeled squares among 100 squares. The test results are shown in Table 3.

(Evaluation Criteria)

A:100/100. B:99/100 to 95/100. C: less than 95/100.

[table 1]

| | Curable composition | | | | | | | | | | | | | |
|---|---|---|---|---|---|---|---|---|---|---|---|---|---|---|
| | Styrene | MSD | MS | DVB | Fluorene group-containing (meth) acrylate | | Hydroxy group-containing (meth) acrylate | | Bisphenol (meth) acrylate | | Ultraviolet absorber | | Polymerization initiator | |
| | Part(s) by mass | Part(s) by mass | Part(s) by mass | Part(s) by mass | Type | Part(s) by mass | Type | Part(s) by mass | Type | Part(s) by mass | Type | Part(s) by mass | Type | Part(s) by mass |
| Example 1 | 70 | 2 | 8 | - | FA1 | 20 | - | - | - | - | UVA1 | 2 | PI1<br>PI3 | 2<br>1 |
| Example 2 | 60 | 2 | 8 | 10 | FA1 | 20 | - | - | - | - | UVA1 | 2 | PI1<br>PI3 | 2<br>1 |
| Example 3 | 50 | 2 | 8 | - | FA1 | 40 | - | - | - | - | UVA1 | 2 | PI1<br>PI3 | 2<br>0.5 |
| Example 4 | 50 | 2 | 8 | - | FA1 | 16 | 3000A | 24 | - | - | UVA1 | 2 | PI1<br>PI3 | 2<br>0.5 |
| Example 5 | 40 | 2 | 8 | - | FA1 | 30 | 3000A | 20 | - | - | UVA1 | 2 | PI1<br>PI3 | 2<br>0.5 |
| Example 6 | 30 | 2 | 8 | - | FA1 | 36 | 3000A | 24 | - | - | UVA1 | 2 | PI1<br>PI2<br>PI3 | 1<br>1<br>0.5 |
| Example 7 | 30 | 2 | 8 | - | FA1 | 36 | 3000A | 4 | BPE200 | 20 | UVA2 | 2 | PI1<br>PI3 | 2<br>0.5 |
| Example 8 | 30 | 2 | 8 | - | FA1 | 36 | 3000A | 4 | BPE100<br>BPE500 | 15<br>5 | UVA2 | 2 | PI1<br>PI3 | 2<br>0.5 |
| Example 9 | 30 | 2 | 8 | - | FA1 | 36 | 3000A | 8 | ABE300<br>BPE500 | 11<br>5 | UVA2 | 2 | PI1<br>PI3 | 2<br>0.5 |

[table 2]

| | Curable composition | | | | | | | | | | | | | |
|---|---|---|---|---|---|---|---|---|---|---|---|---|---|---|
| | Styrene | MSD | MS | DVB | Fluorene group-containing (meth) acrylate | | Hydroxy group-containing (meth) acrylate | | Bisphenol (meth) acrylate | | Ultraviolet absorber | | Polymerization initiator | |
| | Part(s) by mass | Part(s) by mass | Part(s) by mass | Part(s) by mass | Type | Part(s) by mass | Type | Part(s) by mass | Type | Part(s) by mass | Type | Part (s) by mass | Type | Part(s) by mass |
| Example 10 | 30 | 2 | 8 | - | FA1 | 36 | 3000A | 12 | ABE300<br>BPE500 | 7<br>5 | UVA2 | 2 | PI1<br>PI3 | 2<br>0.5 |
| Example 11 | 37 | 2 | 8 | - | FA1 | 36 | 3000A | 12 | BPE500 | 5 | UVA2 | 2 | PI1<br>PI3 | 2<br>0.5 |
| Example 12 | 41 | 2 | 8 | - | | 36 | 3000A | 8 | BPE500 | 5 | UVA2 | 2 | PI1<br>PI3 | 2<br>0.5 |
| Example 13 | 30 | 2 | 8 | - | FA1 | 36 | 3000A<br>HEMA | 8<br>2 | BPE100<br>BPE500 | 9<br>5 | UVA2 | 2 | PI1<br>PI3 | 2<br>0.5 |
| Example 14 | 36 | 2 | 8 | 1 | FA1 | 36 | 3000A | 12 | BPE500 | 5 | UVA2 | 2 | PI1<br>PI3 | 2<br>0.5 |
| Example 15 | 34 | 2 | 8 | 3 | FA1 | 36 | 3000A | 12 | BPE500 | 5 | UVA2 | 2 | PI1<br>PI3 | 2<br>0.5 |
| Example 16 | 32 | 2 | 8 | 5 | FA1 | 36 | 3000A | 12 | BPE500 | 5 | UVA2 | 2 | PI1<br>PI3 | 2<br>0.5 |
| Example 17 | 30 | 2 | 8 | - | FA1 | 43 | 3000A | 12 | BPE500 | 5 | UVA2 | 2 | PI1<br>PI3 | 2<br>0.5 |
| Example 18 | 37 | 2 | 8 | - | FA1 | 41 | 3000A | 12 | - | - | UVA2 | 2 | PI1<br>PI3 | 2<br>0.5 |
| Example 19 | - | 2 | 8 | - | - | - | - | - | BPE100 | 90 | UVA2 | 2 | PI1<br>PI3 | 2<br>0.5 |
| Example 20 | 70 | 2 | 8 | - | FA1 | 20 | - | - | - | - | UVA1 | 2 | PI2<br>PI3 | 2<br>1 |
| Example 23 | 30 | 2 | 8 | - | FA1 | 36 | 3000MK | 8 | BPE100<br>BPE500 | 11<br>5 | UVA2 | 2 | PI1<br>PI3 | 2<br>0.5 |

(continued)

| | Curable composition | | | | | | | | | | | | | |
|---|---|---|---|---|---|---|---|---|---|---|---|---|---|---|
| | Styrene | MSD | MS | DVB | Fluorene group-containing (meth) acrylate | | Hydroxy group-containing (meth) acrylate | | Bisphenol (meth) acrylate | | Ultraviolet absorber | | Polymerization initiator | |
| | Part(s) by mass | Part(s) by mass | Part(s) by mass | Part(s) by mass | Type | Part(s) by mass | Type | Part(s) by mass | Type | Part(s) by mass | Type | Part (s) by mass | Type | Part(s) by mass |
| Example 24 | 30 | 2 | 8 | - | FA1<br>FM1 | 30<br>6 | 3000MK | 8 | BPE100<br>BPE500 | 11<br>5 | UVA2 | 2 | PI1<br>PI3 | 2<br>0.5 |
| Example 25 | 30 | 2 | 8 | - | FA1<br>FM1 | 24<br>12 | 3000MK | 8 | BPE100<br>BPE500 | 11<br>5 | UVA2 | 2 | PI1<br>PI3 | 2<br>0.5 |
| Example 26 | 30 | 2 | 8 | - | FA2 | 36 | 3000MK | 8 | BPE100 | 16 | UVA2 | 2 | PI1<br>PI3 | 2<br>0.5 |

[Table 3]

[table 3]

| | Cured product | | | | HC1 laminate | |
|---|---|---|---|---|---|---|
| | Softening point (°C) | Refractive index | Specific gravity | Haze | YI | Adhesion |
| Example 1 | 100 | 1.60 | 1.08 | A | 2 | C |
| Example 2 | 132 | 1.60 | 1.08 | A | 4 | C |
| Example 3 | 103 | 1.61 | 1.11 | A | 2 | C |
| Example 4 | 102 | 1.59 | 1.11 | A | 2 | A |
| Example 5 | 109 | 1.60 | 1.13 | A | 2 | A |
| Example 6 | 112 | 1.60 | 1.14 | A | 2 | A |
| Example 7 | 114 | 1.60 | 1.14 | A | 2 | B |
| Example 8 | 108 | 1.60 | 1.14 | A | 2 | B |
| Example 9 | 110 | 1.60 | 1.15 | A | 2 | A |
| Example 10 | 110 | 1.60 | 1.15 | A | 2 | A |
| Example 11 | 111 | 1.60 | 1.14 | A | 2 | A |
| Example 12 | 108 | 1.60 | 1.13 | A | 2 | A |
| Example 13 | 109 | 1.60 | 1.15 | A | 2 | A |
| Example 14 | 116 | 1.60 | 1.13 | A | 3 | A |
| Example 15 | 118 | 1.60 | 1.13 | A | 3 | A |
| Example 16 | 123 | 1.60 | 1.13 | A | 4 | A |
| Example 17 | 113 | 1.60 | 1.15 | A | 2 | A |
| Example 18 | 117 | 1.60 | 1.13 | A | 2 | A |
| Example 19 | 128 | 1.57 | 1.17 | A | 2 | C |
| Example 20 | 100 | 1.60 | 1.08 | B | 2 | C |
| Example 23 | 118 | 1.60 | 1.15 | A | 2 | A |
| Example 24 | 120 | 1.60 | 1.15 | A | 2 | A |
| Example 25 | 122 | 1.60 | 1.15 | A | 2 | A |
| Example 26 | 100 | 1.57 | 1.17 | A | 3 | A |

[Table 4]

[table 4]

| | Total number of polymerizable functional groups (mmol/g) | Number of (meth)acryloyl groups (mmol/g) | Ratio of (meth)acryloyl groups |
|---|---|---|---|
| Example 1 | 8.21 | - | - |
| Example 2 | 8.79 | - | - |
| Example 3 | 7.03 | - | - |
| Example 4 | 7.14 | - | - |
| Example 5 | 6.53 | - | - |

(continued)

| | Total number of polymerizable functional groups (mmol/g) | Number of (meth)acryloyl groups (mmol/g) | Ratio of (meth)acryloyl groups |
|---|---|---|---|
| Example 6 | 5.95 | - | - |
| Example 7 | 5.86 | - | - |
| Example 8 | 5.91 | 0.79 | 13% |
| Example 9 | 5.93 | 0.12 | 2% |

[Table 5]

[table 5]

| | Total number of polymerizable functional groups (mmol/g) | Number of (meth)acryloyl groups (mmol/g) | Ratio of (meth)acryloyl groups |
|---|---|---|---|
| Example 10 | 5.91 | 0.12 | 2% |
| Example 11 | 6.25 | 0.12 | 2% |
| Example 12 | 6.47 | 0.12 | 2% |
| Example 13 | 5.97 | 0.68 | 11% |
| Example 14 | 6.31 | 0.12 | 2% |
| Example 15 | 6.42 | 0.12 | 2% |
| Example 16 | 6.54 | 0.12 | 2% |
| Example 17 | 5.83 | 0.12 | 2% |
| Example 18 | 6.31 | - | - |
| Example 19 | 4.74 | 3.98 | 84% |
| Example 20 | 8.21 | - | - |
| Example 23 | 5.88 | 0.92 | 16% |
| Example 24 | 5.87 | 1.13 | 19% |
| Example 25 | 5.86 | 1.34 | 23% |
| Example 26 | 5.66 | 1.02 | 18% |

<Example 21>

(Preparation of Photochromic Optical Article)

Using the cured product (on which a hard coat layer was not formed) obtained by the formulation shown in Example 18 of Table 2 as a lens substrate, a photochromic cured product was laminated on a surface of the lens substrate to obtain a photochromic optical article.

(Preparation of Photochromic Curable Compositions)

Radically polymerizable monomers were mixed in a formula shown below to prepare a photochromic curable composition.

Polyethylene glycol dimethacrylate (average molecular weight 736): 42 parts by mass

Polyethylene glycol dimethacrylate (average molecular weight: 536): 12 parts by mass
Trimethylolpropane trimethacrylate: 38 parts by mass
γ-methacryloyloxypropyltrimethoxysilane: 2 parts by mass

Glycidyl methacrylate: 1 part by mass.

To 100 g of the curable composition, 0.27 mmol of a photochromic compound represented by the following formula (8) was added:

[Chem. 17].

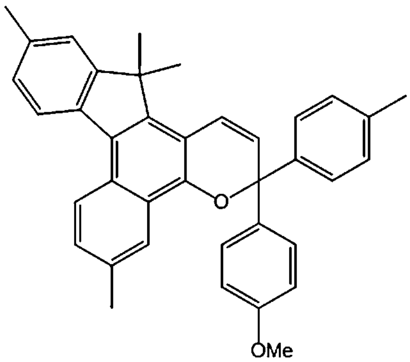

(8)

Further, the following additives were blended. The following blending amounts are blending ratios with respect to 100 parts by mass of the curable composition.

Phenylbis(2,4,6-trimethylbenzoyl)phosphine oxide (photopolymerization initiator: Omnirad 819): 0.3 parts by mass

Ethylenebis(oxyethylene)bis[3-(5-tert-butyl-4-hydroxy-m-tolyl)propionate] (stabilizer, Irganox 245): 1 part by mass
Bis(1,2,2,6,6-pentamethyl-4-piperidyl)sebacate: 3 parts by mass
Leveling agent (L7001) manufactured by Dow Corning Toray: 0.1 parts by mass

(Production of Photochromic Laminates)

First, a cured product (on which a hard coat layer was not formed) having a center thickness of 2 mm obtained by the formulation shown in Example 18 of Table 2 was prepared as the lens substrate. The lens substrate was subjected to alkali etching at 50°C for 5 minutes, in advance, using a 10% sodium hydroxide aqueous solution, and then sufficiently washed with distilled water.

A moisture-curable primer (product name: TR-SC-P, manufactured by Tokuyama) was applied on the surface of the lens substrate, using a spin coater (1H-DX2, manufactured by MIKASA) at 70 rpm for 15 seconds and then at 1000 rpm for 10 seconds. Thereafter, about 2 g of the photochromic curable composition obtained above was spin-coated at 60 rpm for 40 seconds and then at 600 rpm for 10 to 20 seconds so that the coating layer had a thickness of 40 μm. The lens thus coated with the coating agent was irradiated with light for 90 seconds using a metal halide lamp having an output of 200 mW/cm$^2$ in a nitrogen gas atmosphere to cure the coating film. Thereafter, the resultant lens was further heated at 110°C for 1 hour to obtain a photochromic optical article in which a photochromic cured product was laminated on the surface of the lens substrate.

The obtained photochromic optical article was evaluated by the following method, and the evaluation results are shown in Table 6.

[Evaluation Method]

<Photochromic Properties>

The following values were measured using a spectrophotometer (instantaneous multichannel photo detector MCPD3000) manufactured by Otsuka Electronics.

Maximum absorption wavelength (Amax): absorption wavelength after color development.

Color developing density: difference between an absorbance ($A_{300}$) after irradiation with light at 23°C for 300 seconds at the maximum absorption wavelength and an absorbance ($A_0$) when not irradiated with light.

Color fading half-life [$\tau_{1/2}$ (sec)]: period of time taken by the absorbance at the maximum absorption wavelength of the sample to decrease to 1/2 of {$A_{300}$-$A_0$} when irradiation is stopped after irradiation with light at 23°C for 300 seconds.

<Durability>

Residual ratio (%)=[($A_{96}$)/($A_0$) x 100): The resulting photochromic cured product was subjected to accelerated degradation for 96 hours using a xenon weather meter X25 manufactured by Suga Test Instruments Co., Ltd. Color developing densities were evaluated before and after the accelerated degradation test. A ratio ($A_{96}/A_0$) of a color developing density of the photochromic cured product before the test ($A_0$) and a color developing density of the photochromic cured product after the test ($A_{96}$) was determined as a residual ratio, and $A_{96}/A_0$ was used as an index of color developing durability. A higher residual ratio means higher color developing durability.

<Example 22>

A photochromic optical article was obtained in the same manner as in Example 21 except that a thiourethane-based plastic lens having a center thickness of 2 mm and a refractive index of 1.60 was used as the lens substrate.

The obtained photochromic optical article was evaluated in the same manner as in Example 21, and the evaluation results are shown in Table 6.

[Table 6]

[table 6]

| | Lens substrate | | Photochromic optical article | | | |
|---|---|---|---|---|---|---|
| | | | Photochromic properties (23°C) | | | Durability |
| | Refractive index | Specific gravity | $\lambda_{max}$ (nm) | Color developing density | $\tau_{1/2}$ (sec) | Residual ratio (%) |
| Example 21 | 1.60 | 1.13 | 560 | 1.06 | 162 | 79 |
| Example 22 | 1.60 | 1.30 | 560 | 1.06 | 162 | 79 |

Hereinafter, preferred embodiments of the present invention will be described.

[1] A curable composition including:

at least one styrene compound selected from the group consisting of styrene and styrene derivatives,
a fluorene group-containing compound represented by the following formula (I),
a hydroxy group-containing (meth)acrylate:

[Chem. 18]

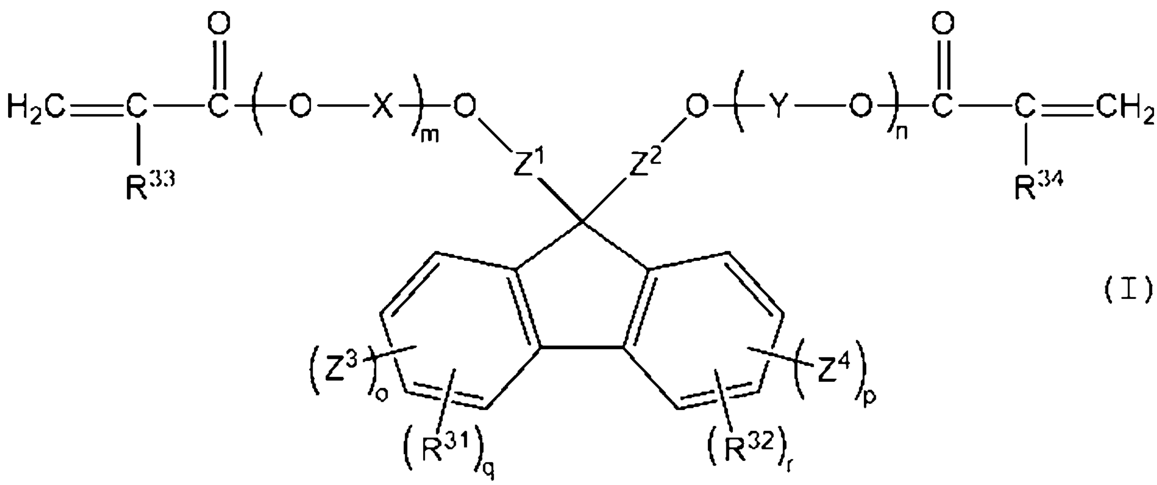

(I)

in which in the formula (I),

$R^{31}$ and $R^{32}$ are each independently an alkyl group, $R^{33}$ and $R^{34}$ are each independently a hydrogen atom or a methyl group,
X and Y are each independently a linear or branched alkylene group having 1 to 4 carbon atoms,
$Z^1$ and $Z^2$ are each independently an aromatic carbocyclic ring having 5 to 10 carbon atoms or an alkylene group having 1 to 4 carbon atoms, $Z^3$ and $Z^4$ are each independently an aromatic carbocyclic ring having 5 to 8 carbon atoms or an alkyl group having 1 to 4 carbon atoms,
m+n is an integer of 0 to 20, and o+q and p+r are each an integer of 0 to 4.

[2] The curable composition as described in [1], in which the hydroxy group-containing (meth)acrylate includes an epoxy di(meth)acrylate represented by the following formula (II):

[Chem. 19]

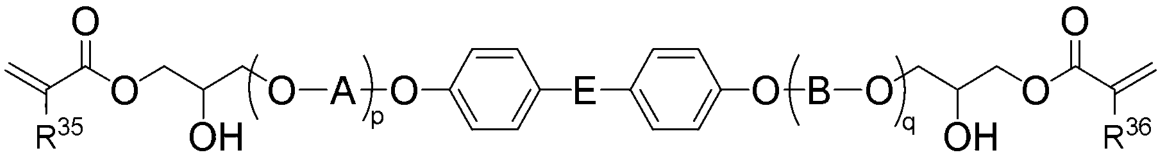

(II)

in the formula (II),

$R^{35}$ and $R^{36}$ are each independently a hydrogen atom or a methyl group,
A and B are each independently a linear or branched alkylene group having 1 to 4 carbon atoms which may be substituted with a hydroxy group,
E is one of the groups shown in the following formulas:

[Chem. 20]

$-O-$, $-S-$, $-S(O_2)-$, $-C(O)-$, $-CH_2-$, $-CH=CH-$,

$-C(CH_3)_2-$ and $-C(CH_3)(C_6H_5)-$

and
p+q=0 to 20.

[3] The curable composition as described in [1] or [2], in which a ratio M1/M2 of a mass M1 of the fluorene group-containing compound to a mass M2 of the styrene compound is 0.10 or more and 1.0 or less.
[4] The curable composition as described in any one of [1] to [3], in which a proportion of the fluorene group-containing compound is 10% by mass or more and 50% by mass or less.
[5] The curable composition as described in any one of [1] to [4], in which a proportion of the hydroxy group-containing (meth)acrylate is 1% by mass or more and 25% by mass or less.
[6] The curable composition as described in any one of [1] to [5], in which a proportion of the styrene compound is 10% by mass or more and 80% by mass or less.
[7] The curable composition as described in any one of [1] to [6], further including an ultraviolet absorber.
[8] The curable composition as described in [7], in which the ultraviolet absorber has a peak in at least one of a wavelength region of 280 nm or more and less than 320 nm or a wavelength region of 320 nm or more and 360 nm or less.
[9] The curable composition as described in any one of [1] to [8], further including a bisphenol (meth)acrylate compound represented by the following formula (III):

[Chem. 21]

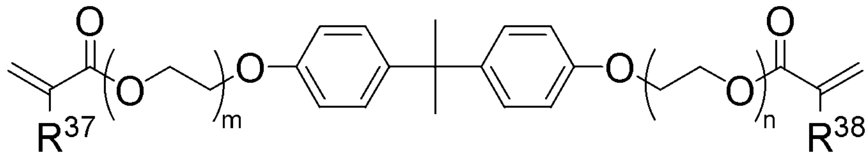

(III)

in which in the formula (III),

$R^{37}$ and $R^{38}$ are each independently a hydrogen atom or a methyl group, and
m+n=1 to 20.

[10] The curable composition as described in [9], in which a proportion of the bisphenol (meth)acrylate compound is 0.1% by mass or more and 30% by mass or less.
[11] The curable composition as described in any one of [1] to [10], in which a ratio of a number of (meth)acryloyl groups (mmol/g) to a total number of polymerizable functional groups (mmol/g) in the curable composition is 2% or more.
[12] A cured product of the curable composition as described in any one of [1] to [11].
[13] The cured product as described in [12], having a softening point of 100°C or higher as measured by thermomechanical analysis.
[14] The cured product as described in [12] or [13], having a refractive index of 1.55 or more.
[15] The cured product as described in any one of [12] to [14], having a specific gravity of 1.20 or less.
[16] An optical article including the cured product as described in any one of [12] to [15].
[17] A lens including the optical article as described in [16].
[18] The lens as described in [17], including:

a lens substrate including the cured product; and
a hard coat layer provided on at least one main surface of the lens substrate.

[19] Eyeglasses including the lens as described in [17] or [18].

## Claims

**1.** A curable composition comprising:

at least one styrene compound selected from the group consisting of styrene and styrene derivatives,
a fluorene group-containing compound represented by the following formula (I),
a hydroxy group-containing (meth)acrylate:

[Chem. 1]

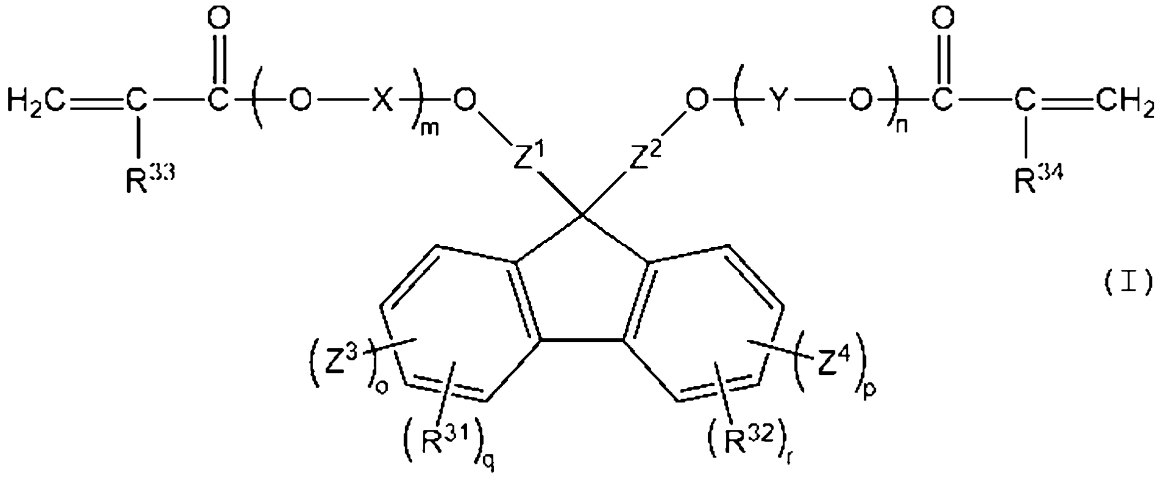

(I)

wherein in the formula (I),
$R^{31}$ and $R^{32}$ are each independently an alkyl group having 1 to 4 carbon atoms,
$R^{33}$ and $R^{34}$ are each independently a hydrogen atom or a methyl group,
X and Y are each independently a linear or branched alkylene group having 1 to 4 carbon atoms,
$Z^1$ and $Z^2$ are each independently an aromatic carbocyclic ring having 5 to 10 carbon atoms or an alkylene group having 1 to 4 carbon atoms,
$Z^3$ and $Z^4$ are each independently an aromatic carbocyclic ring having 5 to 8 carbon atoms or an alkyl group having 1 to 4 carbon atoms,
m+n is an integer of 0 to 20, and o+q and p+r are each an integer of 0 to 4.

2. The curable composition according to claim 1, wherein the hydroxy group-containing (meth)acrylate comprises an epoxy di(meth)acrylate represented by the following formula (II):

[Chem. 2]

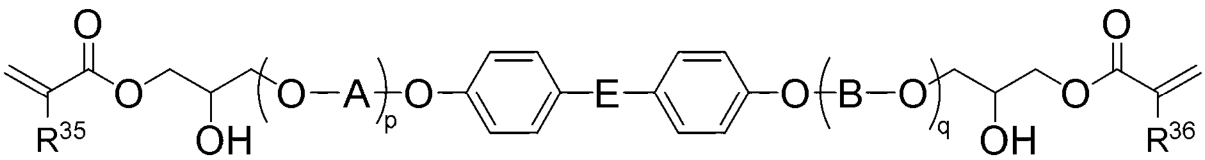

(II)

in the formula (II),
$R^{35}$ and $R^{36}$ are each independently a hydrogen atom or a methyl group,
A and B are each independently a linear or branched alkylene group having 1 to 4 carbon atoms which may be substituted with a hydroxy group,
E is one of the groups shown in the following formulas:

[Chem. 3]

$-O-$, $-S-$, $-S(O_2)-$, $-C(O)-$, $-CH_2-$, 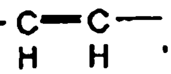 ,

$-C(CH_3)_2-$ and $-C(CH_3)(C_6H_5)-$

and
p+q=0 to 20.

**3.** The curable composition according to claim 1, wherein a ratio M1/M2 of a mass M1 of the fluorene group-containing compound to a mass M2 of the styrene compound is 0.10 or more and 1.0 or less.

**4.** The curable composition according to claim 1, wherein a proportion of the fluorene group-containing compound is 10% by mass or more and 50% by mass or less.

**5.** The curable composition according to claim 1, wherein a proportion of the hydroxy group-containing (meth)acrylate is 1% by mass or more and 25% by mass or less.

**6.** The curable composition according to claim 1, wherein a proportion of the styrene compound is 10% by mass or more and 80% by mass or less.

**7.** The curable composition according to claim 1, further comprising an ultraviolet absorber.

**8.** The curable composition according to claim 7, wherein the ultraviolet absorber has a peak in at least one of a wavelength region of 280 nm or more and less than 320 nm or a wavelength region of 320 nm or more and 360 nm or less.

**9.** The curable composition according to claim 1, further comprising a bisphenol (meth)acrylate compound represented by the following formula (III):

[Chem. 4]

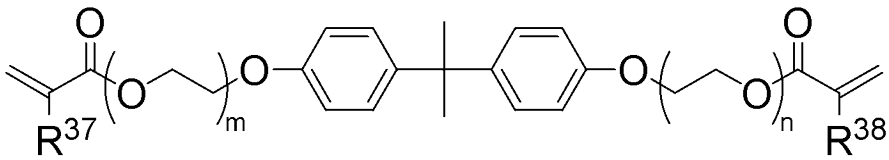

(III)

wherein in the formula (III),
$R^{37}$ and $R^{38}$ are each independently a hydrogen atom or a methyl group, and
m+n=1 to 20.

**10.** The curable composition according to claim 9, wherein a proportion of the bisphenol (meth)acrylate compound is 0.1% by mass or more and 30% by mass or less.

**11.** The curable composition according to claim 1, wherein a ratio of a number of (meth)acryloyl groups (mmol/g) to a total number of polymerizable functional groups (mmol/g) in the curable composition is 2% or more.

**12.** A cured product of the curable composition according to claim 1.

**13.** The cured product according to claim 12, having a softening point of 100°C or higher as measured by thermomechanical analysis.

**14.** The cured product according to claim 12, having a refractive index of 1.55 or more.

**15.** The cured product according to claim 12, having a specific gravity of 1.20 or less.

**16.** An optical article comprising the cured product according to claim 12.

**17.** A lens comprising the optical article according to claim 16.

**18.** The lens according to claim 17, comprising:

a lens substrate comprising the cured product; and

a hard coat layer provided on at least one main surface of the lens substrate.

**19.** Eyeglasses comprising the lens according to claim 17.

FIG. 1

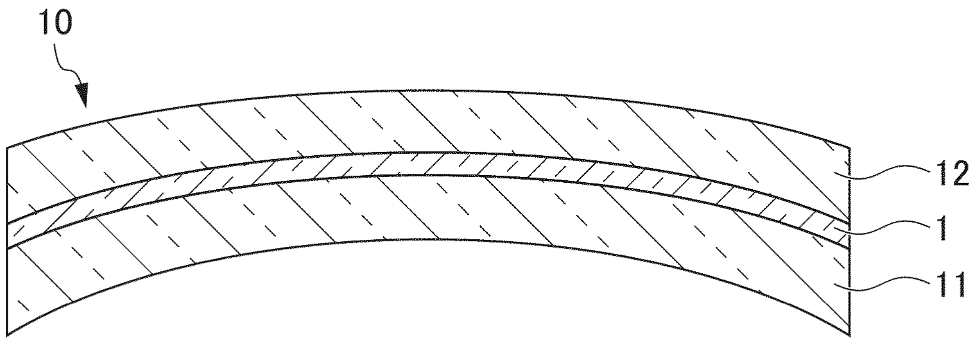


FIG. 2

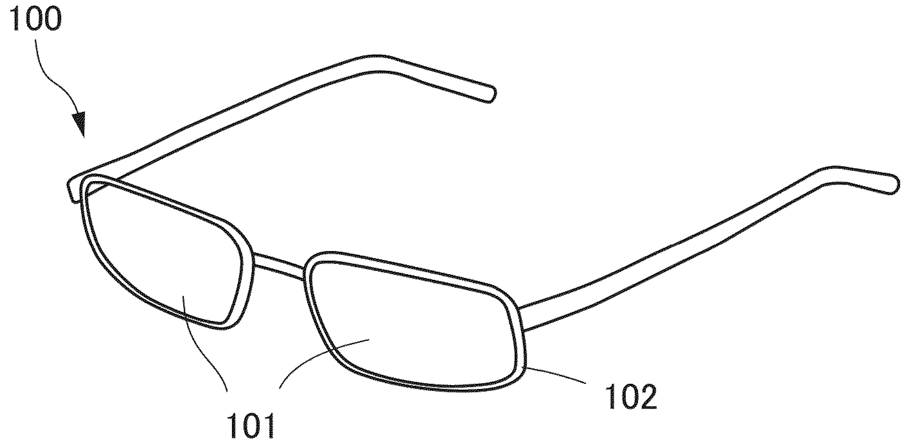

**INTERNATIONAL SEARCH REPORT**

International application No.
**PCT/JP2024/018595**

**A. CLASSIFICATION OF SUBJECT MATTER**

***C08F 212/08***(2006.01)i; ***C08F 2/44***(2006.01)i; ***C08F 220/20***(2006.01)i; ***C08F 220/26***(2006.01)i; ***G02B 1/04***(2006.01)i; ***G02C 7/00***(2006.01)i
FI: C08F212/08; C08F2/44 B; C08F220/20; C08F220/26; G02B1/04; G02C7/00

According to International Patent Classification (IPC) or to both national classification and IPC

**B. FIELDS SEARCHED**

Minimum documentation searched (classification system followed by classification symbols)

C08F2/00-299/08; C08L1/00-101/16; G02B1/00-1/18; G02C7/00-7/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | US 2015/0376355 A1 (CHI MEI CORPORATION) 31 December 2015 (2015-12-31)<br>claims, column "examples" (for example, [A-2], [A-7]), etc. | 1-19 |
| X | US 2015/0378256 A1 (CHI MEI CORPORATION) 31 December 2015 (2015-12-31)<br>claims, column "examples" (for example, [B-2], [B-7]), etc. | 1-19 |
| X | CN 112175553 A (NANJING HUIXIN PHOTOELECTRIC MATERIAL CO., LTD.) 05 January 2021 (2021-01-05)<br>claims, column "examples", etc. | 1-19 |
| X | CN 115287023 A (NANJING HUIXIN PHOTOELECTRIC MATERIAL CO., LTD.) 04 November 2022 (2022-11-04)<br>claims, column "examples", etc. | 1-19 |
| X | WO 02/48220 A1 (TOKUYAMA CORPORATION) 20 June 2002 (2002-06-20)<br>claims, column "examples" (for example, [example 74]), etc. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/018595**

**C. DOCUMENTS CONSIDERED TO BE RELEVANT**

| Category* | Citation of document, with indication, where appropriate, of the relevant passages | Relevant to claim No. |
|---|---|---|
| Y | JP 4-325508 A (MITSUBISHI RAYON CO., LTD.) 13 November 1992 (1992-11-13) claims, column "examples", etc. | 1-19 |
| Y | CN 105175607 A (SHOUGUANG LUYUAN SALT CHEMICAL CO., LTD.) 23 December 2015 (2015-12-23) claims, column "examples", etc. | 1-19 |
| Y | CN 113845619 A (SHANDONG LUYUAN CHEMICAL TECHNOLOGY CO., LTD.) 28 December 2021 (2021-12-28) claims, column "examples", etc. | 1-19 |
| Y | CN 115109186 A (SHANDONG LUYUAN CHEMICAL TECHNOLOGY CO., LTD.) 27 September 2022 (2022-09-27) claims, column "examples", etc. | 1-19 |
| Y | JP 2004-256591 A (KUREHA CHEMICAL IND CO., LTD.) 16 September 2004 (2004-09-16) claims, paragraph [0028], column "examples" (for example, [example 2], [example 5]), etc. | 1-19 |
| A | JP 11-14801 A (SEED CO., LTD.) 22 January 1999 (1999-01-22) | 1-19 |
| A | JP 2011-90275 A (DAXIN MATERIALS CORPORATION) 06 May 2011 (2011-05-06) | 1-19 |
| A | CN 105504120 A (SHENZHEN LIANSHEN CHEMICAL TECHNOLOGY CO., LTD.) 20 April 2016 (2016-04-20) | 1-19 |
| A | CN 115598926 A (SHENZHEN BONDLING SEMICONDUCTOR MATERIALS CO., LTD.) 13 January 2023 (2023-01-13) | 1-19 |

Form PCT/ISA/210 (second sheet) (July 2022)

**INTERNATIONAL SEARCH REPORT**
**Information on patent family members**

International application No.
**PCT/JP2024/018595**

| Patent document cited in search report | Publication date (day/month/year) | Patent family member(s) | Publication date (day/month/year) |
|---|---|---|---|
| US 2015/0376355 A1 | 31 December 2015 | TW 201600928 A<br>CN 105319845 A | |
| US 2015/0378256 A1 | 31 December 2015 | TW 201600933 A<br>CN 105319852 A | |
| CN 112175553 A | 05 January 2021 | (Family: none) | |
| CN 115287023 A | 04 November 2022 | (Family: none) | |
| WO 02/48220 A1 | 20 June 2002 | US 2004/0046156 A1<br>claims, column "examples" (for example, [example 74]), etc.<br>EP 1359170 A1 | |
| JP 4-325508 A | 13 November 1992 | (Family: none) | |
| CN 105175607 A | 23 December 2015 | (Family: none) | |
| CN 113845619 A | 28 December 2021 | (Family: none) | |
| CN 115109186 A | 27 September 2022 | (Family: none) | |
| JP 2004-256591 A | 16 September 2004 | (Family: none) | |
| JP 11-14801 A | 22 January 1999 | (Family: none) | |
| JP 2011-90275 A | 06 May 2011 | TW 201115266 A | |
| CN 105504120 A | 20 April 2016 | WO 2017/092650 A1 | |
| CN 115598926 A | 13 January 2023 | WO 2024/087355 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004269814 A
- JP 2008001777 A
- JP 2012246382 A
- JP 2012251032 A
- JP H4325508 A